# EUROPEAN PATENT APPLICATION

(11) **EP 4 566 873 A1**
(43) Date of publication of application: **11.06.2025**
(21) Application number: 23214980.7
(22) Date of filing: 07.12.2023
(51) Int. Cl.: B60L 58/21, H01M 10/42, H01M 50/249, H01M 50/258, H01M 50/296, H01M 50/298

(54) **A MODULAR BATTERY PACK ARRANGEMENT**

(71) Applicant: VOLVO TRUCK CORPORATION, 405 08 Göteborg (SE)
(72) Inventor: JONSSON, Kasper, 417 57 GÖTEBORG (SE); IRANNEZHAD, Mike, 411 20 GÖTEBORG (SE); ROUT, Dhirendra, 422 54 GÖTEBORG (SE); LINDELÖW, Fredrik, 541 94 SKÖVDE (SE)
(74) Representative: Kransell & Wennborg KB

(57) **Abstract**

A modular battery pack arrangement (30) comprising: a master battery pack (31) arranged in a master battery pack housing (132), and a battery disconnection unit (33) configured to disconnect the master battery pack (31) from a load and/or a power source (10); one or more slave battery packs (41,51) arranged in a corresponding slave battery pack housing (142, 152) physically separated from the master battery pack housing (132), wherein the one or more slave battery packs (41, 51) share the battery disconnection unit (33) with the master battery pack (31).

## Description

### TECHNICAL FIELD

The disclosure relates generally to a modular battery pack arrangement. In particular aspects, the disclosure relates to a modular battery pack arrangement comprising a master battery pack electrically connected in series with one or more slave battery packs. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

A vehicle typically comprises an engine for propelling the vehicle. The engine may be powered by various means, such as e.g. by liquid or gaseous fuel in a combustion engine or an internal combustion engine. Alternatively, the vehicle may be propelled by electric power in an electric machine. Moreover, hybrid solutions exist in which the vehicle is propelled both by an internal combustion engine and an electric machine. In either way, an energy storage device is used to store the energy needed in order to propel the vehicle. Energy storage devices may further be used to power auxiliary loads in the vehicle.

For many vehicles, the energy storage devices are comprised in an energy storage system, wherein the energy storage system is configured to power the electric machine for propelling the vehicle, as well as any auxiliary load. For example, for an electric vehicle, the energy storage devices may be batteries or battery packs, which are configured to operate the electric machine as well as electrically driven auxiliary equipment. The electric machine and/or the electrically driven auxiliary equipment may be commonly referred to as a load. Several batteries, or several series-connected and/or parallel connected battery cells, may be grouped into the battery pack. The battery pack is periodically in need of charging, and is then electrically connected to an electrical energy source, e.g. via plug directly connected to the power grid, or by an on-board charger. Such chargers may commonly be referred to as a power source.

In many applications, several battery packs are included in the energy storage system by being parallelly or series connected, e.g. to a common traction voltage bus. For series connected battery packs, a first battery pack may be arranged to electrically connect to the load and/or power source, and a second battery pack may be electrically connected in series with the first battery pack. However, managing such series connected battery packs may be cumbersome, and there is thus a need in the industry for an improved energy storage system comprising series-connected battery packs.

### SUMMARY

According to a first aspect of the disclosure, a modular battery pack arrangement is provided. The modular battery pack arrangement comprises: a master battery pack comprising a plurality of battery cells arranged in a master battery pack housing, and a battery disconnection unit configured to disconnect the master battery pack from a load and/or a power source; one or more slave battery packs, each one of the one or more slave battery packs comprising a plurality of battery cells arranged in a corresponding slave battery pack housing physically separated from the master battery pack housing, wherein the one or more slave battery packs share the battery disconnection unit with the master battery pack; each one of the master battery pack and the one or more slave battery packs comprising at least two terminal connection pairs enabling the master battery pack to be electrically connected in series with the one or more slave battery packs; and wherein one of the two terminal connection pairs in the slave battery pack being arranged furthest away from the master battery pack is short-circuited. The first aspect of the disclosure may seek to overcome problems with modular battery pack arrangement being difficult to manage. That is, by the first aspect, and in particular owing to the shared battery disconnection unit and that the slave battery pack being arranged furthest away from the master battery pack has a terminal connection pair which is short-circuited, accessing the modular battery pack arrangement for e.g. maintenance is facilitated. In other words, the electrical interface, typically that corresponding to the battery disconnection unit, may be accessed from one position, as the arrangement of the terminal connection pairs, including the short-circuited terminal connection pair of the slave battery pack being arranged furthest away from the master battery pack, enables both electrical connections of the terminal connection pairs of the modular battery pack arrangement to be routed to the master battery pack and the battery disconnection unit. That is, as the terminal connection pairs enabling the master battery pack to be electrically connected in series with the one or more slave battery packs, wherein the slave battery pack being arranged furthest away from the master battery pack has a terminal connection pair which is short-circuited, the shared battery disconnection unit (i.e. shared by the master battery pack and the one or more slave battery packs) form a common electrical interface accessible from one position of the modular battery pack arrangement. A technical benefit may include improved management of the modular battery pack arrangement. It should be noted that the plurality of battery cells in the master battery pack and/or the one or more slave battery packs may be series-connected and/or parallelly connected. For example, a predetermined number of the battery cells in one battery pack may be connected in parallel to form a "logical cell" and then several "logical cells" may be connected in series inside the battery pack. The short-circuited terminal connection pair may be achieved by an electrical connection being a fuse, a cable or a conducting bus. In particular, using a fuse for short-circuiting the terminal connection pair may provide an efficient means for breaking the electrical connection between the battery packs.

Optionally in some examples, including in at least one preferred example, the battery disconnection unit is directly electrically connected to a main positive terminal and/or a main negative terminal of the master battery pack. A technical benefit may include an advantageous location of the battery disconnection unit within the master battery pack. For example, in examples in which the battery disconnection unit is directly electrically connected to the main positive terminal and the main negative terminal of the master battery pack, a fist component of the battery disconnection unit may be directly electrically connected to the main positive terminal and a second component of the battery disconnection unit may be directly electrically connected to the main negative terminal. Hereby, the electrical interface of the battery disconnection unit for both the positive and negative terminal connections of the modular battery pack arrangement is arranged in a common location or position of the modular battery pack arrangement. It should be understood that one of the terminal connection pairs of the master battery pack may comprise a main positive terminal and a main negative terminal. The main positive and negative terminals are for example forming the terminals which a load (e.g. an electric traction machine) or a power source (e.g. a charger) is electrically connected to. The battery disconnection unit is preferably arranged between the main positive terminal and the plurality of battery cells of the main battery pack, and/or between the main positive terminal and the plurality of battery cells of the main battery pack. As will be mentioned later, but briefly commented upon here, the battery disconnection unit may be a contactor, or comprise a contactor (i.e. a component of the battery disconnection unit may be a contactor). Thus, for example, a first battery disconnection unit being a first contactor, or comprising a first contactor, is arranged between the main positive terminal and the plurality of battery cells of the main battery pack, and a second battery disconnection unit being a second contactor, or comprising a second contactor, is arranged between the main negative terminal and the plurality of battery cells of the main battery pack. Thus, the first contactor is configured to connect and disconnect the main positive terminal with the plurality of the battery cells of the main battery pack (and consequently the plurality of battery cells of the one or more slave battery packs being series-connected to the master battery pack), and the second contactor is configured to connect and disconnect the main negative terminal with the plurality of the battery cells of the main battery pack (and consequently the plurality of battery cells of the one or more slave battery packs being series-connected to the master battery pack). The first and second contactors may be comprised in a common contactor unit. It should however be understood that other battery disconnection units, or components of the battery disconnection unit, may be arranged between battery cells in the master battery pack.

Optionally in some examples, including in at least one preferred example, each terminal connection pair of the master battery pack and the one or more slave battery packs is a negative and positive terminal connection. A technical benefit may include that both the positive and negative electrical connections of the modular battery pack arrangement are routed to the master battery pack and the battery disconnection unit. For example, the battery disconnection unit is electrically connected to both the positive and negative electrical connections of the modular battery pack arrangement, as previously described, and the arrangement of the terminal connection pairs, including the short-circuited terminal connection pair of the slave battery pack being arranged furthest away from the master battery pack, thus enables both the positive and negative electrical connections of the modular battery pack arrangement to be routed to battery disconnection unit of the master battery pack. That is, the positive electrical connection is routed from the master battery pack and the positive terminal connection of the terminal connection pairs to the one or more slave battery packs and their corresponding positive terminal connection of the terminal connection pairs, and the negative electrical connection is routed from the slave battery pack arranged furthest away from the master battery pack and its short-circuited terminal connection pair, via the negative terminal connection of the terminal connection pairs of the one or more slave battery packs, to the master battery pack and its corresponding negative terminal connection of the terminal connection pairs. It should be noted that the slave battery pack being arranged furthest away from the master battery pack, is arranged furthest away with regards to the electrical connection (series-connection) of the master battery pack and the one or more slave battery packs.

Optionally in some examples, including in at least one preferred example, the negative and positive terminals for each terminal connection pair of the master battery pack and the one or more slave battery packs are adjacent. A technical benefit may include an advantageous routing of the positive and negative electric connections from the master battery pack to the slave battery pack being arranged furthest away from the master battery pack, back to the mater battery pack. Adjacent may here refer to within 0.1 m, or within 0.2 m.

Optionally in some examples, including in at least one preferred example, the operating voltage of the modular battery pack arrangement is scalable by the number of the one or more slave battery packs. A technical benefit may include an efficient way to adapt the operating voltage of the modular battery pack arrangement. That is, an additional slave battery pack may be added in between the master battery pack and the slave battery pack being arranged furthest away from the master battery pack and having one of its terminal connection pair short-circuited, or the short-circuited terminal connection pair may instead be achieved for the additional slave battery pack in case such battery pack is arranged furthest away from the master battery pack.

Optionally in some examples, including in at least one preferred example, the modular battery pack arrangement further comprises a high voltage connection electrically connecting the master battery pack and the one or more slave battery packs. A technical benefit may include high voltage operation of the modular battery pack. For example, the previously mentioned positive and negative electrical connections are high voltage connections. Thus, the positive high voltage connection may connect the master battery pack with the one or more slave battery pack by the positive terminals of the corresponding terminal connection pairs, and the negative high voltage connection may connect the master battery pack with the one or more slave battery pack by the negative terminals of the corresponding terminal connection pairs.

Optionally in some examples, including in at least one preferred example, the modular battery pack arrangement further comprises a low voltage connection electrically connecting the master battery pack and the one or more slave battery packs. A technical benefit may include additional functionality of the modular battery pack.

Optionally in some examples, including in at least one preferred example, the battery disconnection unit includes a low voltage connection contactor configured to break the low voltage connection. Such low voltage connection contactor may be comprised in the previously mentioned first contactor, second contactor or common contactor unit.

Optionally in some examples, including in at least one preferred example, the low voltage connection is arranged to transfer signals indicative of voltage and/or temperature measurements between the master battery pack and the one or more slave battery packs. A technical benefit may include efficient transferring of signals between the master battery pack and the one or more slave battery packs. Thus, the low voltage connection may be configured to transfer sensor data comprising voltage and/or temperature data.

Optionally in some examples, including in at least one preferred example, the modular battery pack arrangement further comprises a transportation frame, the transportation frame comprising a first type fastening arrangement, wherein each one of the master battery pack and the one or more slave battery packs comprises a second type fastening arrangement configured to be detachably attached to the first type fastening arrangement for transporting the master battery pack and the one or more slave battery packs in the transportation frame. A technical benefit may include an efficient structure for transporting the mater battery pack and the one or more slave battery packs of the modular battery pack arrangement. Moreover, as the battery disconnection unit, e.g. comprising or consisting of the first contactor and/or the second contactor as previously mentioned, is shared between the master battery pack and the one or more slave battery packs, the modular battery pack arrangement can be transported in a safe manner even though the slave battery packs are not provided with individual battery disconnection units (i.e. there are no separate battery disconnection units comprising or consisting of a contactor for the high voltage connections associated with the slave battery packs).

Optionally in some examples, including in at least one preferred example, the first type fastening arrangement comprises a plurality of first fastening structures, each one of the first fastening structures being associated with a corresponding battery pack of the master battery pack and the one or more slave battery packs, and wherein at least two of the plurality of first fastening structures are arranged side-by-side for mechanically coupling the master battery pack and at least one of the one or more slave battery packs adjacent each other in the transportation frame. A technical benefit may include an efficient structure for transporting the mater battery pack and the one or more slave battery packs of the modular battery pack arrangement. The first fastening structure may e.g. be L-shaped brackets.

Optionally in some examples, including in at least one preferred example, the at least two first fastening structures arranged side-by-side are releasably attached to each other. A technical benefit may include an advantageous structure for releasably attaching the master battery pack to one of the slave battery packs, or for releasably attaching two slave battery packs. Thus, a first one of the first fastening structure associated with the master battery pack (and being attached to the master battery pack by the second fastening arrangement) may be releasably attached to a second one of the first fastening structure associated with one of the slave battery packs (and being attached to the slave battery pack by the second fastening arrangement). The at least two first fastening structures may be releasably attached to each other by using first fasteners. That is, a first one of the first fasteners, e.g. a screw or a bolt and nut, may be interacting with an opening or through hole of the first one of the first fastening structure and an opening or through hole of the second one of the first fastening structure. Thus, the first one of the first fasteners may be configured to threadingly engage with the openings or through holes of the first and second of the first fastening structures. Moreover, in case the first one of the first fasteners is a bolt and nut, the bolt head may be arranged on a first side of the first and second first fastening structures, the shank or thread of the bolt may be extending through the opening or through hole of the first one of the first fastening structure and through the opening or through hole of the second one of the first fastening structure, and the nut may be threadingly engaging with the thread of the bolt on the second side of the first and second first fastening structures opposite to the first side.

Optionally in some examples, including in at least one preferred example, the second type fastening arrangement comprises a plurality of second fastening structures, each one of the second fastening structures being associated with a corresponding battery pack of the master battery pack and the one or more slave battery packs, and wherein each one of the second fastening structures is detachably attached to a corresponding first fastening structure of the transportation frame. A technical benefit may include an efficient structure of attaching the transportation frame to the master battery pack and the one or more slave battery packs. Thus, a first fastening structures associated with a battery pack, e.g. the master battery pack, may be detachably attached to a second fastening structure of that battery pack using second fasteners. That is, a first one of the second fasteners, e.g. a screw, may be interacting with an opening or through hole of the first fastening structure and an opening of the second fastening structure. Thus, the first one of the second fasteners may be configured to threadingly engage with the openings or through holes of the first fastening structures and the opening or the second fastening structure. The second fastening structure may e.g. comprise, or consist of, threaded holes in the corresponding battery pack housing of the master battery pack and the one or more slave battery packs. Hereby, the second fasteners, e.g. corresponding screws, may extend through the through holes of the first fastening structure and then threadingly engage with the threaded holes of the master battery pack and the one or more slave battery packs. For example, the first fastening structures may be L-shaped brackets having a first type of through holes arranged in a first shank of the L-shaped brackets for interacting with the first fasteners, and a second type of through holes arranged in a second shank of the L-shaped brackets for interacting with the second fasteners, wherein the first shank and the second shank together forms the L-shape of the bracket (i.e. are angled 90 degrees relative to each other).

Optionally in some examples, including in at least one preferred example, the battery disconnection unit is configured to concurrently disconnect the master battery pack and the one or more slave battery packs from the load or the power source. A technical benefit may include shared functionality for disconnecting the master battery pack and the one or more slave battery packs from the load or the power source. Hence, there is no need to include corresponding separate battery disconnection units for the one or more slave battery packs.

Optionally in some examples, including in at least one preferred example, the battery disconnection unit comprises a least a contactor. A technical benefit may include shared functionality for disconnecting the master battery pack and the one or more slave battery packs from the load or the power source by using a contactor. The contactor may thus be configured to connect and disconnect the master battery pack, and the one or more slave battery packs, to and from the load or the power source. The contactor may e.g. be the first contactor and/or the second contactor previously mentioned.

Optionally in some examples, including in at least one preferred example, the battery disconnection unit comprises a positive contactor arranged on the positive side of the series-connected master battery pack and the one or more slave battery packs, and a negative contactor arranged on the negative side of the series-connected master battery pack and the one or more slave battery packs. A technical benefit may include that the positive and negative contactors may be accessed by same the electrical interface corresponding to the battery disconnection unit. The positive contactor may e.g. be the first contactor, and the negative contactor may e.g. be the second contactor previously mentioned.

Optionally in some examples, including in at least one preferred example, the battery disconnection unit comprises a PCB including battery management functionality. A technical benefit may include additional shared functionality between the master battery pack and the one or more slave battery packs-

Optionally in some examples, including in at least one preferred example, each one of the slave battery pack housing does not house a battery disconnection unit comprising at least a contactor. A technical benefit may include reduced complexity and/or reduced cost of the modular battery arrangement as the battery disconnection unit comprising at least a contactor (e.g. a contactor configured to connect and disconnect the slave battery packs to and from a load or a power source) is shared with the master battery pack. For example, each one of the slave battery pack housing does not house a battery disconnection unit comprising at least a contactor configured to connect and disconnect the corresponding slave battery pack with the master battery pack, and/or with the load and/or power source.

According to a second aspect of the disclosure, a vehicle comprising the modular battery pack arrangement of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an electric machine for propelling the vehicle, the electric machine being powered by the modular battery pack arrangement.

Optionally in some examples, including in at least one preferred example, the operating voltage of the modular battery pack arrangement is adaptable by the number of slave battery packs in the modular battery pack arrangement, and wherein the number of slave battery packs in the modular battery pack arrangement corresponds to the associated requirements of the electric machine. A technical benefit may include an efficient way to adapt the operating voltage of the modular battery pack arrangement of the vehicle. Thus, the master battery pack may be used as a stand-alone battery pack, connected to one or more slave battery packs (not being stand-alone battery packs).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of an electric vehicle comprising an electric machine for propelling the vehicle and a modular battery pack arrangement for powering the electric machine according to one example.
**FIG. 2** is an exemplary, partly schematic, side view of a modular battery pack arrangement according to one example.
**FIG. 3** is an exemplary schematic view of a master battery pack and a first and a second slave battery pack of the modular battery pack arrangement according to one example.
**FIG. 4** is an exemplary schematic view of a high voltage connection and a low voltage connection between the master battery pack and the first slave battery pack according to one example.

### DETAILED DESCRIPTION

The detailed description set forth below provides information and examples of the disclosed technology with sufficient detail to enable those skilled in the art to practice the disclosure.

The disclosed technology may solve the problem relating to difficulties in managing a modular battery pack arrangement. The disclosed technology provides an improved electrical interface, at least that corresponding to the battery disconnection unit. That is, as the one or more slave battery packs and the master battery pack share a common battery disconnection unit and are electrically connected in series by corresponding terminal connection pairs, wherein one of the two terminal connection pairs in the slave battery pack being arranged furthest away from the master battery pack is short-circuited, the accessibility of at least the battery disconnection unit is improved. A technical benefit may include improved management of the modular battery pack arrangement. By sharing a common battery disconnection unit between the master battery pack and the one or more series-connected slave battery packs, and providing a short-circuited terminal connection pair of the slave battery pack being arranged furthest away from the master battery pack, the electrical connections of the terminal connection pairs can be routed to the same position of the modular battery pack arrangement, typically the battery disconnection unit, and thereby more easily accessed and managed. Moreover, the modular battery pack arrangement can be transported in a safe manner even though the slave battery packs are not provided with individual battery disconnection units.

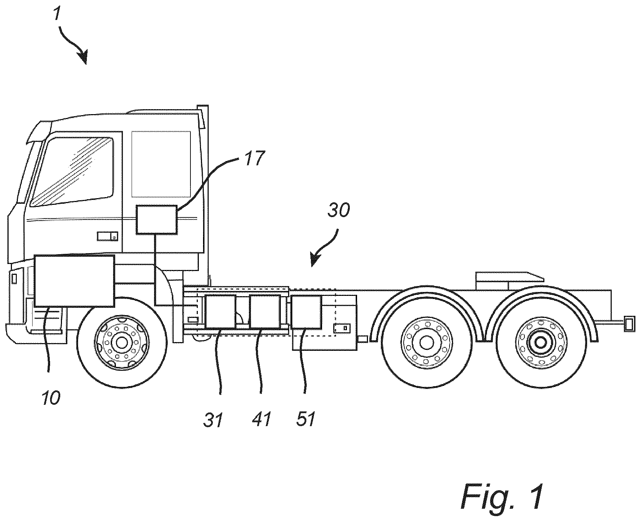

**FIG. 1** shows a vehicle 1 in the form of an exemplary heavy-duty truck. The vehicle 1 is an electric vehicle, such as a full electric vehicle or a hybrid, comprising at least one electric machine 10 (as an electric traction machine) powered by a modular battery pack arrangement 30, wherein in the example of Fig. 1, the modular battery pack arrangement 30 comprises three series connected battery packs 31, 41, 51. The battery packs 31, 41, 51 are configured to power at least one load, such as the electric machine 10. Moreover, the vehicle 1 comprises a control unit 17 arranged and configured for controlling at least parts of the operation of the modular battery pack arrangement 30, such as the operation of a battery disconnection unit of the modular battery pack arrangement 30. The vehicle 1 typically further comprises other parts of the powertrain such as transmission, drive shafts and wheels (not shown in detail). The electric machine 10 may be operated as an electric motor consuming electricity provided by the battery packs 31, 41, 51, e.g. to provide propulsion power, and may be operated as a generator to generate electricity to charge the battery packs 31, 41, 51.

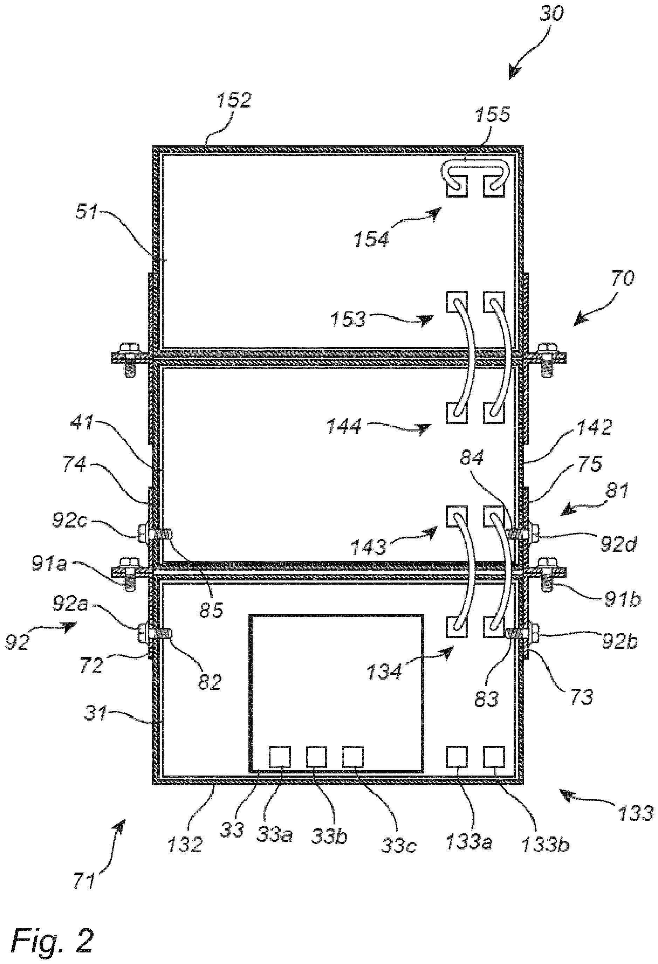

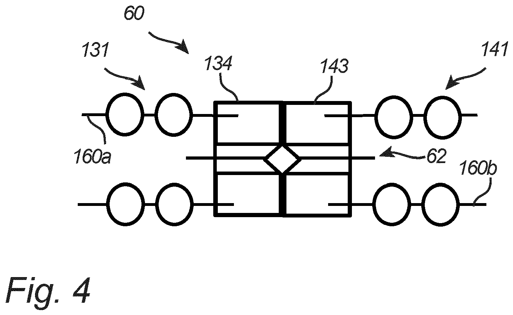

In **FIG. 2****,** the modular battery pack arrangement 30 is shown in greater detail. The modular battery pack arrangement 30 comprises a master battery pack 31 comprising a plurality of battery cells (shown in Fig. 4) arranged in a master battery pack housing 132, a first slave battery pack 41 comprising a plurality of battery cells (shown in Fig. 4) arranged in a first slave battery pack housing 142, and a second slave battery pack 51 comprising a plurality of battery cells (shown in Fig. 4) arranged in a second slave battery pack housing 152. The first slave battery pack 41 is arranged closest to the master battery pack 31, both physically and electrically, and the second slave battery pack 52 is arranged furthest away from the master battery pack 31, both physically and electrically. The master battery pack housing 132 is physically separated from the first and second slave battery pack housings 142, 152. It should be noted that the modular battery pack arrangement 30 in Fig. 2 comprises two slave battery packs 41, 51, but may comprise only one slave batter pack, or more than two slave battery packs connected in series with the master battery pack 31. Thus, the operating voltage of the modular battery pack arrangement 30 is scalable by the number of the one or more slave battery packs 41, 51.

The modular battery pack arrangement 30 comprises a battery disconnection unit 33 configured to connect and disconnect the master battery pack 31 to and from a power source and/or a load, such as the electric machine 10. The battery disconnection unit 33 is arranged in the master battery pack housing 132 and may comprises a positive contactor 33a, a negative contactor 33b and a PCB 33c including battery management functionality. Both of the first and second slave battery packs 41, 51 share the battery disconnection unit 33 with the master battery pack 31. In other words, the master battery pack 31 and the first and second slave battery packs 41, 51 share a common battery disconnection unit 33.

As shown in Fig. 2, each one of the master battery pack 31, and the first and second slave battery packs 41, 51, comprises at least two terminal connection pairs 133, 134, 143, 144, 153, 154 enabling the master battery pack 31 to be electrically connected in series with the first and second slave battery packs 41, 51. Thus, the master battery pack 31 comprises a first terminal connection pair 133 for electrically connecting the modular battery pack arrangement 30 to a load and/or a power source (such as the electric machine 10), and a second terminal connection pair 134 electrically connected to a first terminal connection pair 143 of the first slave battery pack 41. Correspondingly, the first slave battery pack 41 comprises a second terminal connection pair 144 electrically connected to a first terminal connection pair 153 of the second slave battery pack 51. The second slave battery pack 51 comprises a second terminal connection pair 154 which is short-circuited. Hereby, the electrical connections which series-connect the master battery pack 31 with the first and second slave battery packs 41, 51 is routed from the master battery pack 31 to the first slave battery pack 41 and further to the second slave battery pack 51. Thereafter, the electrical connection is routed back, via the short-circuited second terminal connection 154 of the second slave battery pack 51, to the second slave battery pack 41 and further to the master battery pack 31. Thus, of the first and second slave battery packs 41, 51, the second slave battery pack 51 is electrically arranged furthest away from the master battery pack 31. As will be described with reference to Fig. 4, each one of the terminal connection pairs 133, 134, 143, 144, 153, 154 comprises a positive and a negative terminal connection, and as can be seen in Fig. 2, the negative and positive terminals 133a, 133b (only indicated for the first terminal connection 133 of the master battery pack 31 in Fig. 2) for each terminal connection pair 133, 134, 143, 144, 153, 154 of the master battery pack 31 and the one or more slave battery packs 41, 51 are adjacent, such as e.g. arranged within 0.1 m or 0.2 m from each other.

The modular battery pack arrangement 30 of Fig. 2 further comprises a transportation frame 70. The transportation frame 70 comprises a first type fastening arrangement 71 including a plurality of first fastening structures 72, 73, 74, 75 for arranging the master battery pack 31 and the first and second slave battery packs 41, 51 in the transportation frame 70. For example, the first type fastening arrangement 71 may be used to arrange the master battery pack 31 and the first and second slave battery packs 41, 51 side-by-side. As seen in Fig. 2, a first pair of the plurality of first fastening structures, such as a first one of the first fastening structures 72 (associated with the master battery pack 31) and a third one of the first fastening structures 74 (associated with the first slave battery pack 31) are arranged side-by-side. Correspondingly, a second pair of the plurality of first fastening structures, such as a second one of the first fastening structures 73 (associated with the master battery pack 31) and a fourth one of the first fastening structures 75 (associated with the first slave battery pack 31) are arranged side-by-side. Hereby, the master battery pack 31 may be mechanically coupled side-by-side with the first slave battery pack 41, such that the master battery pack 31 is arranged adjacent the first slave battery pack 41. Each such pair of first fastening structures 71 arranged side-by-side may be releasably attached to each other by using first fasteners 91a, 91b. Each one of the first fasteners 91a, 91b may e.g. be comprised of a bolt and a nut. Even though not explicitly referred to in Fig. 2, the first slave battery pack 41 may be releasably attached to the second slave battery pack 51 using the transportation frame 70 and first fasteners in a corresponding manner as for the master battery pack 31 and the first slave battery pack 41.

As also shown in Fig. 2, each one of the master battery pack 31 and the first and second slave battery packs 41, 51 comprises a second type fastening arrangement 81 including a plurality of associated second fastening structures 82, 83, 84, 85. The second fastening structures 82, 83, 84, 85 are configured to be detachably attached to the first fastening structures 72, 73, 74, 75 using second fasteners 92. Hereby, the transportation frame 70 may be releasably attached to the master battery pack 31 and the first and second slave battery packs 41, 51 in an advantageous manner. For example, the first one of the first fastening structure 72 associated with master battery pack 31 is detachably attached to a first one of the second fastening structure 82 of the master battery pack 31 using a first one of second fasteners 92a on a first side of the master battery pack 31. The first one of the second fasteners 92a is e.g. a screw which extends through a through hole of the first one of the first fastening structure 72 and into a threaded hole of the first one of the second fastening structures 82 for threadingly engaging with the same. A corresponding second one of the first fastening structure 73, a second one of the second fastening structure 83, and a second of the second fasteners 92b may be used to detachably attach the master battery pack 31 to the transportation frame 70 on a second side of the master battery pack 31, opposite to the first side. Corresponding structures, i.e. a third and fourth of the first fastening structure 74, 75, a third and fourth of the second fastening structure 84, 85, and a third and fourth of the second fasteners 92c, 92d may be used to detachably attach the first slave battery pack 41 to the transportation frame 70 on a first and opposite second sides of the first slave battery pack 41. Moreover, corresponding structure, even though not explicitly referred to in Fig. 2, may be used to detachably attach the second slave battery pack 51 to the transportation frame 70 on a first and opposite second sides of the second slave battery pack 51.

For example, and as shown in Fig. 2, for the first type fastening arrangement 71 to enable releasable attachment to each other, and to the battery packs 31, 41, 51, the first fastening structures 72, 73, 74, 75 may be L-shaped brackets. Thus, a first shank of a first L-shaped bracket 72 is arranged to face a corresponding first shank of another L-shaped bracket 74, and second shank of the L-shaped brackets 72, 74 are arranged to face the corresponding battery pack 31, 41. Hereby, the modular battery pack arrangement 30 may be transported in an improved manner.

Even though the first and second fastening structures 72, 73, 74, 75, 82, 83, 84, 85 are only indicated for the master battery pack 31 and the end portion of the first slave battery pack 41 which is releasably attached to the master battery pack 31 in Fig. 2, it should be understood that corresponding first and second fastening structures are present for the end portion of the first slave battery pack 41 which his releasably attached to the second slave battery pack 51, as well as for the second slave battery pack 51.

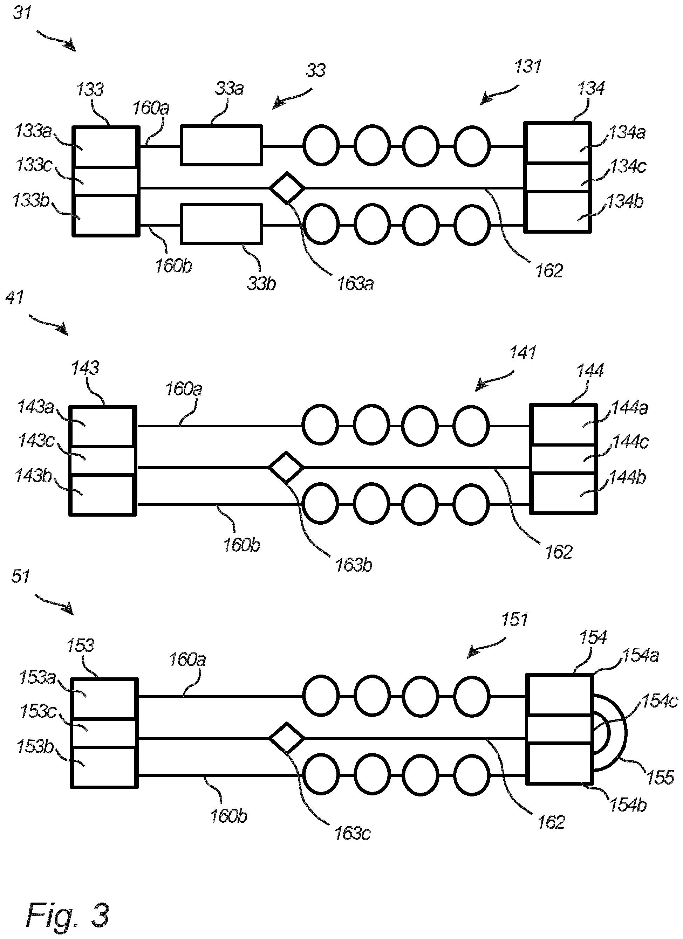

Turning to **FIG. 3****,** showing partly schematic schemes of the master battery pack 31, the first battery pack 41, and the second battery pack 51 of the modular battery pack arrangement 30 of Fig. 2. Each one of the master battery pack 31 and the first and second slave battery packs 41, 51 comprises a plurality of battery cells 131, 141, 151 forming a high voltage line 160a, 160b electrically connecting the master battery pack 31 and the first and second slave battery packs 41, 51. As also shown in Fig. 3, a low voltage line 162 electrically connects the master battery pack 31 and the first and second slave battery packs 41, 51. The low voltage line 162 may transfer signals indicative of voltage and/or temperature measurements between the master battery pack 31 and the one or more slave battery packs 41, 51. For example, the low voltage line 162 may comprise one or more low voltage components 163a, 163b, 163c, e.g. a sensor for measuring voltage and/or temperature. The high voltage line 160a, 160b may be configured for voltages over 100 V and the low voltage line 162 configured for voltages under 100 V. For example, the high voltage line 160a, 160b may be configured for voltages over 200 V, such as e.g. between 200 V and 1000 V, or between 600 V and 1000 V. The low voltage line 162 may be configured for voltages over 5 V, such as e.g. between 5 V and 95 V, or between 12 V and 24 V.

Each one of the first and second terminal connection pairs 133, 134 of the master battery pack 31 comprises a corresponding positive terminal connection 133a, 134a and a corresponding negative terminal connection 133b, 134b. Correspondingly, each one of the first and second terminal connection pairs 143, 144 of the first slave battery pack 41 comprises a corresponding positive terminal connection 143a, 144a and a corresponding negative terminal connection 143b, 144b, and each one of the first and second terminal connection pairs 153, 154 of the second slave battery pack 51 comprises a corresponding positive terminal connection 153a, 154a and a corresponding negative terminal connection 153b, 154b. Thus, a positive high voltage line 160a is connected by the positive terminal connections 133a, 134a, 143a, 144a, 153a, 154a, and a negative high voltage line 160b is connected by the negative terminal connections 133b, 134b, 143b, 144b, 153b, 154b. In Fig. 2, battery cells 131, 141, 151 are present in both the positive and negative high voltage lines 160a, 160b, but it should be mentioned that the plurality of battery cells 131, 141, 151 may alternatively may be arranged only in the positive high voltage line 160a or the negative high voltage line 160b. As shown in Fig. 2, the second terminal connection pair 154 of the second slave battery pack 51 is short-circuited as the positive terminal connection 154a is directly electrically connected to the negative terminal connection 154b by means of an electrical connection 155 being a fuse, a cable or a conducting bus.

As shown in Fig. 3, the battery disconnection unit 33 is directly electrically connected to the main positive terminal 133a and the main negative terminal 133b of the master battery pack 31. Thus, the battery disconnection unit 33 comprises a first component 33a, here being exemplified as a first contactor 33a or positive contactor 33a, arranged between the main positive terminal 133a and the plurality of battery cells 131, and a second component 33b, here being exemplified as a second contactor 33b or negative contactor 33b, arranged between the main negative terminal 133b and the plurality of battery cells 131. Moreover, as the second terminal connection pair 134 of the master battery pack 31 is directly electrically connected to the first terminal connection pair 143 of the first slave battery pack 41, and as the second terminal connection pair 144 of the fist slave battery pack 41 is directly electrically connected to the first terminal connection pair 153 of the second slave battery pack, the battery disconnection unit 33 is configured to concurrently disconnect the master battery pack 31 and the one or more slave battery packs 41, 51 from the load or the power source.

Turning to **FIG. 4** showing a high voltage connection 60 electrically connecting the master battery pack 31 and the first slave battery pack 41. However, it should be mentioned that a corresponding high voltage connection is typically used to electrically connect the first slave battery pack 41 and the second slave battery pack 51.

In the high voltage connection 60, the second terminal connection pair 134 of the master battery pack 31 is directly electrically connected to the first terminal connection pair 143 of the first slave battery pack 41. Thus, the high voltage connection 60 electrically connects the high voltage lines 160a, 160b of the master battery pack 31 and the first slave battery packs 41. Moreover, as shown in Fig. 4, the modular battery pack arrangement 30 may comprise a low voltage connection 62 electrically connecting the master battery pack 31 and the first slave battery pack 41. Thus, the low voltage connection 62 electrically connects the low voltage line 162 of the master battery pack 31 and the first slave battery pack 41. Hereby, signals transferred in the low voltage line 162 may be transferred between the master battery pack 31 and the first slave battery pack 41. Moreover, it should be mentioned that a corresponding low voltage connection is typically used to electrically connect the first slave battery pack 41 and the second slave battery pack 51. As shown in Fig. 4, the high voltage connection 60 and the low voltage connection 62 may be integrated into one connection unit.

From Fig. 4, it is clear that the first and second slave battery packs 41, 52 do not comprise a corresponding battery disconnection unit 33 as the main battery pack 31. Thus, each one of the slave battery pack housing 142, 152 (shown in Fig. 2) does not house a battery disconnection unit comprising at least a contactor.

Example 1. A modular battery pack arrangement comprising: a master battery pack comprising a plurality of battery cells arranged in a master battery pack housing, and a battery disconnection unit configured to disconnect the master battery pack from a load and/or a power source; one or more slave battery packs, each one of the one or more slave battery packs comprising a plurality of battery cells arranged in a corresponding slave battery pack housing physically separated from the master battery pack housing, wherein the one or more slave battery packs share the battery disconnection unit with the master battery pack, each one of the master battery pack and the one or more slave battery packs comprising at least two terminal connection pairs enabling the master battery pack to be electrically connected in series with the one or more slave battery packs, and wherein one of the two terminal connection pairs in the slave battery pack being arranged furthest away from the master battery pack is short-circuited.

Example 2. The modular battery pack arrangement of example 1, wherein the battery disconnection unit is directly electrically connected to a main positive terminal and/or a main negative terminal of the master battery pack.

Example 3. The modular battery pack arrangement of any of examples 1-2, wherein each terminal connection pair of the master battery pack and the one or more slave battery packs is a negative and positive terminal connection.

Example 4. The modular battery pack arrangement of example 3, wherein the negative and positive terminals for each terminal connection pair of the master battery pack and the one or more slave battery packs are adjacent.

Example 5. The modular battery pack arrangement of any of examples 1-4, wherein the operating voltage of the modular battery pack arrangement is scalable by the number of the one or more slave battery packs.

Example 6. The modular battery pack arrangement of any of examples 1-5, further comprising a high voltage connection electrically connecting the master battery pack and the one or more slave battery packs.

Example 7. The modular battery pack arrangement of any of examples 1-6, further comprising a low voltage connection electrically connecting the master battery pack and the one or more slave battery packs.

Example 8. The modular battery pack arrangement of example 7, wherein the low voltage connection is arranged to transfer signals indicative of voltage and/or temperature measurements between the master battery pack and the one or more slave battery packs.

Example 9. The modular battery pack arrangement of any of examples 1-8, further comprising a transportation frame, the transportation frame comprising a first type fastening arrangement, wherein each one of the master battery pack and the one or more slave battery packs comprises a second type fastening arrangement configured to be detachably attached to the first type fastening arrangement for transporting the master battery pack and the one or more slave battery packs in the transportation frame.

Example 10. The modular battery pack arrangement of example 9, wherein the first type fastening arrangement comprises a plurality of first fastening structures, each one of the first fastening structures being associated with a corresponding battery pack of the master battery pack and the one or more slave battery packs, and wherein at least two of the plurality of first fastening structures are arranged side-by-side for mechanically coupling of the master battery pack and at least one of the one or more slave battery packs adjacent each other in the transportation frame.

Example 11. The modular battery pack arrangement of example 10, wherein the at least two first fastening structures arranged side-by-side are releasably attached to each other.

Example 12. The modular battery pack arrangement of any of examples 10-11, wherein the second type fastening arrangement comprises a plurality of second fastening structures, each one of the second fastening structures being associated with a corresponding battery pack of the master battery pack and the one or more slave battery packs, and wherein each one of the second fastening structures is detachably attached to a corresponding first fastening structure of the transportation frame.

Example 13. The modular battery pack arrangement of any of examples 1-12, wherein the battery disconnection unit is configured to concurrently disconnect the master battery pack and the one or more slave battery packs from the load or the power source.

Example 14. The modular battery pack arrangement of any of examples 1-13, wherein the battery disconnection unit comprises a least a contactor.

Example 15. The modular battery pack arrangement of example 14, wherein the battery disconnection unit comprises a positive contactor arranged on the positive side of the series-connected master battery pack and the one or more slave battery packs, and a negative contactor arranged on the negative side of the series-connected master battery pack and the one or more slave battery packs.

Example 16. The modular battery pack arrangement of any of examples 1-15, wherein the battery disconnection unit comprises a PCB including battery management functionality.

Example 17. The modular battery pack arrangement of any of examples 1-16, wherein each one of the slave battery pack housing does not house a battery disconnection unit comprising at least a contactor.

Example 18. A vehicle comprising the modular battery pack arrangement of any of claims 1-17.

Example 19. The vehicle of example 18, further comprising an electric machine for propelling the vehicle, the electric machine being powered by the modular battery pack arrangement.

Example 20. The vehicle of example 19, wherein the operating voltage of the modular battery pack arrangement is adaptable by the number of slave battery packs in the modular battery pack arrangement, and wherein the number of slave battery packs in the modular battery pack arrangement corresponds to the associated requirements of the electric machine.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A modular battery pack arrangement (30) comprising:
- a master battery pack (31) comprising a plurality of battery cells (131) arranged in a master battery pack housing (132), and a battery disconnection unit (33) configured to disconnect the master battery pack (31) from a load and/or a power source (10),
- one or more slave battery packs (41,51), each one of the one or more slave battery packs (41, 51) comprising a plurality of battery cells (141, 151) arranged in a corresponding slave battery pack housing (142, 152) physically separated from the master battery pack housing (132), wherein the one or more slave battery packs (41, 51) share the battery disconnection unit (33) with the master battery pack (31),
each one of the master battery pack (31) and the one or more slave battery packs (41, 51) comprising at least two terminal connection pairs (133, 134, 143, 144, 153, 154) enabling the master battery pack (31) to be electrically connected in series with the one or more slave battery packs (41, 51), and
wherein one of the two terminal connection pairs (153, 154) in the slave battery pack (51) being arranged furthest away from the master battery pack (31) is short-circuited.

2. The modular battery pack arrangement (30) of claim 1, wherein the battery disconnection unit (33) is directly electrically connected to a main positive terminal (133a) and/or a main negative terminal (133b) of the master battery pack (31).

3. The modular battery pack arrangement (30) of any of claims 1-2, wherein each terminal connection pair (133, 134, 143, 144, 153, 154) of the master battery pack (31) and the one or more slave battery packs (41, 51) is a negative and positive terminal connection (133a, 133b, 134a, 134b, 143a, 143b, 144a, 144b, 153a, 153b, 154a, 154b).

4. The modular battery pack arrangement (30) of claim 3, wherein the negative and positive terminals (133a, 133b, 134a, 134b, 143a, 143b, 144a, 144b, 153a, 153b, 154a, 154b) for each terminal connection pair (133, 134, 143, 144, 153, 154) of the master battery pack (31) and the one or more slave battery packs (41, 51) are adjacent.

5. The modular battery pack arrangement (30) of any of claims 1-4, wherein the operating voltage of the modular battery pack arrangement (30) is scalable by the number of the one or more slave battery packs (41, 51).

6. The modular battery pack arrangement (30) of any of claims 1-5, further comprising a high voltage connection (60) electrically connecting the master battery pack (31) and the one or more slave battery packs (41, 51).

7. The modular battery pack arrangement (30) of any of claims 1-6, further comprising a transportation frame (70), the transportation frame (70) comprising a first type fastening arrangement (71), wherein each one of the master battery pack (31) and the one or more slave battery packs (41, 51) comprises a second type fastening arrangement (81) configured to be detachably attached to the first type fastening arrangement (71) for transporting the master battery pack (31) and the one or more slave battery packs (41, 51) in the transportation frame (70).

8. The modular battery pack arrangement (30) of claim 7, wherein the first type fastening arrangement (71) comprises a plurality of first fastening structures (72, 73, 74, 75), each one of the first fastening structures (72, 73, 74, 75) being associated with a corresponding battery pack of the master battery pack (31) and the one or more slave battery packs (41, 51), and wherein at least two of the plurality of first fastening structures (72, 73, 74, 75) are arranged side-by-side for mechanically coupling of the master battery pack (31) and at least one of the one or more slave battery packs (41,51) adjacent each other in the transportation frame (70).

9. The modular battery pack arrangement (30) of claim 8, wherein the at least two first fastening structures (72, 73, 74, 75) arranged side-by-side are releasably attached to each other.

10. The modular battery pack arrangement (30) of any of claims 8-9, wherein the second type fastening arrangement (81) comprises a plurality of second fastening structures (82, 83, 84, 85), each one of the second fastening structures (82, 83, 84, 85) being associated with a corresponding battery pack of the master battery pack (31) and the one or more slave battery packs (41,51), and wherein each one of the second fastening structures (82, 83, 84, 85) is detachably attached to a corresponding first fastening structure (72, 73, 74, 75) of the transportation frame (70).

11. The modular battery pack arrangement (30) of any of claims 1-10, wherein the battery disconnection unit (33) is configured to concurrently disconnect the master battery pack (31) and the one or more slave battery packs (41, 51) from the load or the power source.

12. The modular battery pack arrangement (30) of any of claims 1-11, wherein the battery disconnection unit (33) comprises a least a contactor (33a, 33b).

13. The modular battery pack arrangement (30) of claim 12, wherein the battery disconnection unit (33) comprises a positive contactor (33a) arranged on the positive side of the series-connected master battery pack (31) and the one or more slave battery packs (41, 51), and a negative contactor (33b) arranged on the negative side of the series-connected master battery pack (31) and the one or more slave battery packs (41, 51).

14. The modular battery pack arrangement (30) of any of claims 1-13, wherein each one of the slave battery pack housing (142, 152) does not house a battery disconnection unit comprising at least a contactor.

15. A vehicle (1) comprising the modular battery pack arrangement (30) of any of claims 1-14.
